# EUROPEAN PATENT SPECIFICATION

(11) **EP 0 402 331 B1**
(45) Date of publication and mention of the grant of the patent: **23.06.1993**
(21) Application number: 90850144.8
(22) Date of filing: 19.04.1990
(51) Int. Cl.: A47L 15/42, D06F 39/08, G01F 23/14

(54) **Device for a level sensor for household appliances**
Vorrichtung für einen Füllstandssensor für Haushaltsgeräte
Dispositif pour un capteur de niveau pour appareils ménagers

(30) Priority: 02.05.1989 SE 8901580
(43) Date of publication of application: 12.12.1990
(73) Proprietor: AKTIEBOLAGET ELECTROLUX, 105 45 Stockholm (SE)
(72) Inventor: Tolf, Anders Karl Henrik, S-552 45 Jönköping (SE)
(74) Representative: Erixon, Bo

(56) References cited:
- DE-A- 3 346 428
- DE-B- 2 457 206
- GB-A- 1 267 737

## Description

This invention relates to a level sensor device for household appliances or the like and comprises a container having a compartment which at its lower part via a combined in-and outlet is connected to a treatment chamber to which liquid is supplied, the upper part of the compartment forming a closed section communicating with a pressure sensing means.

It is previously known to use level sensing devices for household appliances such as dishwashers and washing machines since it is necessary to cut off the supply of water to the machine when the water has reached a predetermined level in the treatment chamber.A common method is to create a communication by means of hose between the treatment chamber and the lower part of an hermetically closed compartment and to connect the upper part of the compartment with a pressure sensor. Because of the increasing air pressure in the compartment when water flows into it the water level in the compartment does not rise as much as the water level in the treatment chamber. When emptying the machine by disharging the water in the treatment chamber also the water which has been collected in the compartment flows back to the treatment chamber by means of gravity and this builds up pressure in the compartment. However the back flow of water from the compartment takes a rather long time since air at the same time has to flow in the opposite direction and there is a risk that the compartment because of air leakage is not emptied completely which means that the system will not work properly.

GB 1.081.082 shows another type of level sensor for a washing machine where the level sensor comprises a container having several sections divided by partition walls. One of the sections is connected to a pressure sensor, another section is by means of a channel communicating with the other sections and is further connected to a pump by means of a hose. The remaining sections communicate with atmosphere and there also is an overflow device and combined in- and outlet for water. The purpose of the arrangement is to eliminate the risk for foam rising up into the pressure sensin section. This device is however complicated because of the large number of sections and the necessity to empty the device by a separate pump connection.

GB-A-1.267.737, which forms the state of the art technique on which claim 1 is based, describes a dishwasher having a pressure sensing device which is connected to the discharge duct of the machine. This pressure sensing device comprises a chamber into which water flows through the discharge duct. The chamber communicates via a pipe with the spray system of the machine in order to clean the chamber during the wash procedure. The chamber is also provided with a conventional venting tube and a tube connected to a pressure actuating device.

The purpose of this invention is to create a simple level sensor and to eliminate the above problems by safeguarding a complete emptying of the compartment in a very short time. This is achieved by an invention having the characteristics mentioned in the claims.

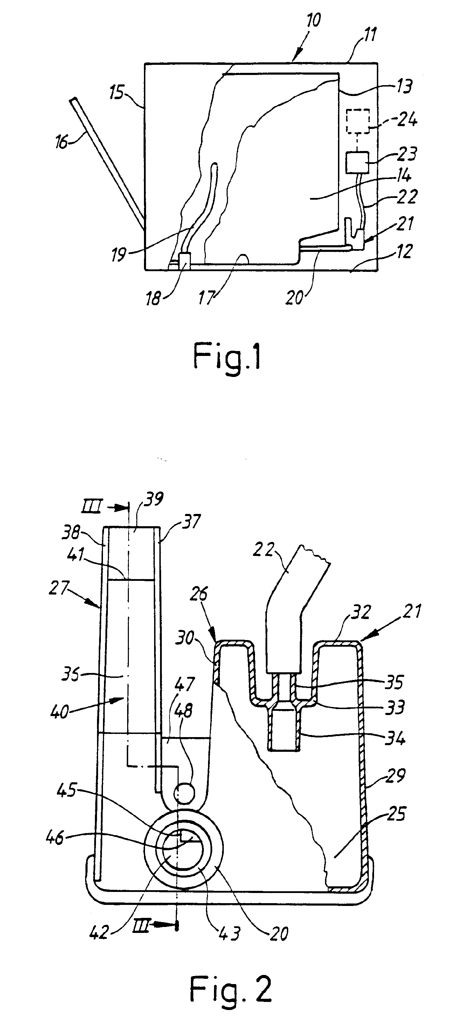

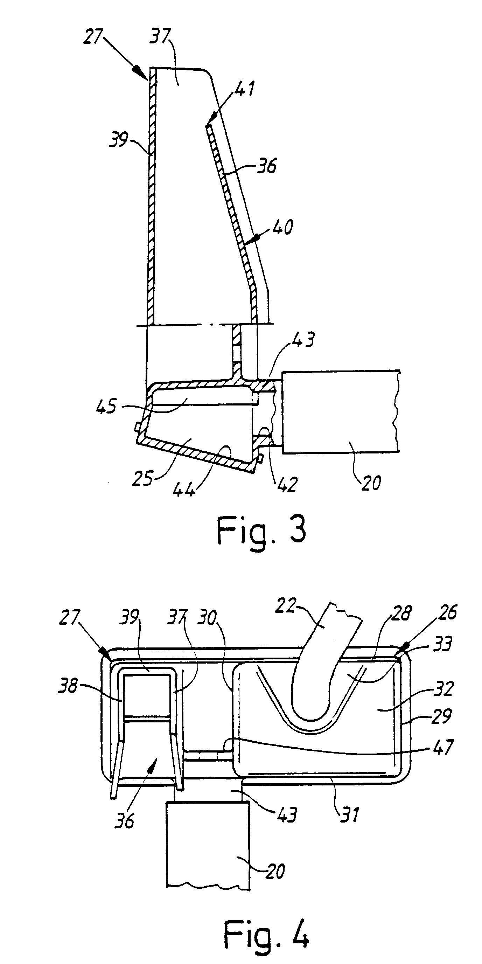

The invention will now be described with reference to the accompanying drawings where Fig. 1 diagrammatically shows a partly broken side view of a dishwasher in which the invention is used. Fig. 2 shows a partly broken front view of the device according to the invention. Fig. 3 shows a section on the line III-III in Fig. 2 and Fig. 4 shows a plan view of said device.

As appears from Fig. 1 the dishwasher 10 comprises an outer shell 11 with a bottom plate 12 which encloses an inner shell 13 surrounding a treatment chamber 14 in which the dish is inserted and washed. The treatment chamber 14 has a opening 15 which during the dishwashing operation is covered by a lid 16. The lower part of the treatment chamber is provided with a sump 17 to which the water supplied to the dishwasher is guided and from which it is pumped to spray arms, not shown, in the treatment chamber the spray arms distributing the water on the dish. From the sump the water via a sewage pump, not shown, can be disharged to a sewage or the like. In order to prevent overflow if some kind of fault function should occur in the machine it is as usual provided with an overflow valve 18 cutting off the water supply to the machine through the hose 19 is water should flow down on the bottom plate 12.

In order to cut off the water supply when a suitable quantity of water is present in the machine the sump 17 via a hose 20 is connected to a level container 21 which will be described in detail below. The container 21 is placed between the outer shell 11 of the machine and the inner shell 13 and is via a hose 22 connected to a pressure sensor 23. The pressure sensor is further connected to the electric circuit 24 of the machine so that when a certain predetermined pressure is indicated by the pressure sensor a valve, not shown, cuts off the water supply through the hose 19.

The level container 21 which preferably is made of plastic comprises a compartment 25 having two upper, separated from each other sections 26 and 27 respectively. One of the sections 26 is limited by sidewalls 28, 29, 30, 31 and a roof part 32 connecting these walls and having a lower central area 33 surrounding a sleeve 34 extending down into the compartment. The sleeve continues vertically upwards as a tube shaped socket 35 to which the hose 22 leading to the pressure sensor 24 is fastened.

The other section 27 is shaped as an upwardly open channel with four sidewalls 36, 37, 38 and 39 one sidewall 36 being somewhat shorter than the other walls and being inclined so that the channel which is formed is narrowed in the upwards direction. The sidewalls 37 and 38 are extended somewhat outside the sidewall 36 and thus form a trench 40 in which the water which might rise up into channel above and upper edge 41 of the wall 36 flows to the bottom plate 12 of the machine.

The lower part of the compartment has a combined in- and outlet 42 which is shaped as a sleeve 43 to which the hose 20 communicating with the treament chamber 14 is connected the combined in- and outlet 42 being placed between the two sections 26, 27 at the bottom 44 of the compartment. A short partition wall 45 extends vertically downwards between the two sections 26, 27 in the area of the combined in- and outlet 42 this partition wall continuing into a part 46 which is a continuation the sidewall 31. Thus, the part 46 restricts a part of the combined in- and outlet 42.

Betwen the two sections there also is a flange 47 with a hole 48 by means of which the level container 21 can be fastened at a suitable height in the lower part of the machine. This height of course has to be adapted to the actual levels in the treament chamber 14.

The device operates in the following way. The water entering the treatment chamber 14 through the hose 19 flows down into the sump 17. When the water level in the sump reaches the hose 20 water will flow into the level container 21 through the hose 20 and the combined in- and outlet 42. Continued rise of the level in the sump 17 and in the treatment chamber 14, according to the law of communicating vessels, means that the water surface after a certain time reaches the lower part of the partition wall 45 whereas air leaves through the section 27. When additional water enters the machine and hence also into the container 21 the water level in the section 27 will rise at the same rate as the level in the treatment chamber at the same time as the air continues to leave to atmosphere through the opening in the upper part of the section. In the section 26 however the level will not rise as much as in the section 27 since the air above the water surface will be compressed so that an increased pressure will be the result in the hose 22. This increased pressure influences the pressure sensor 23 which will be activated at a certain value corresponding to a certain level in the treament chamber, the pressure sensor activating the electric circuit 24 so that the flow of water into the machine is cut off.

When emptying starts after a dishwashing operation and the water is discharged from the treatment chamber 14 to the sewage the water will flow back to the sump 17 through the combined in and outlet 42. At the same time air will be sucked into the level container 21 through the section 27 so that the level in this section sinks at the same rate as the level in the treatment chamber 14 and the sump 17. Usually the level in the section 26 also sinks so that the levels in the two sections are the same when the levels have reached the lower part of the partition wall 45. Should air have leaked out from the section 26 or the hose 22 and thus caused a rising level in it, air during the emptying stage will leak upwards from the section 27 below the partition wall 45 and further into the section 26 thereby speeding up the equalization of the subatmospheric pressure which in such a situation is present above the water surface in the section 26. By this arrangement a construction is achieved which is able to deal with large air leakage and which admits a very rapid emptying velocity of the container.

Should the level in the treatment chamber 14 become so high that the water flows over the edge 41 of the sidewall 36 this water will by means of the trench 40 be guided to the bottom plate 12 of the machine thereby activating the overflow protection 18 so that further supply of water is prevented.

## Claims

1. Level sensor device for household appliances or the like and comprising a container (21) with a compartment (25) which at its lower part via a single combined in- and outlet (42) is connected to a treatment chamber (14) to which liquid is supplied, the upper part of the compartment having a first section (26) communicating with a pressure sensing means (23), and a second section (27) which is separated from the first section (26) and which communicates with atmosphere, **characterized** in that the combined in- and outlet (42) is placed between the two sections.

2. Device according to claim 1, **characterized** in that the two sections (26, 27) are separated from each other by means of a partition wall (45).

3. Device according to claim 2, **characterized** in that the partition wall (45) extends mainly vertically downwards in the area between the two sections the lower edge of the partition wall being placed below the upper part of the combined in- and outlet (42).

4. Device according to claim 2 or 3, **characterized** in that the partition wall (45) is placed so that its imagined continuation divides the combined in- and outlet (42) in two mainly equally large parts.

5. Device according to claim 4, **characterized** in that the partition wall continues into a part (46) which partly covers the combined in- and outlet (42).

6. Device according to any of the preceding claims, **characterized** in that the container (21) is made of plastic.

## Patentansprüche

1. Niveausensorvorrichtung für die Anwendung im Haushalt oder ähnliches, der einen Behälter (21) mit einem Raum (25) umfallt, welcher an seinem unteren Teil über einen einzigen kombinierten Ein- und Auslaß (42) mit einer Bearbeitungskammer (14) verbunden ist, der Flüssigkeit zugeführt,wird, wobei der obere Teil des Raumes einen ersten Abschnitt (26) umfallt, der mit einer Drucksensorvorrichtung (23) versehen ist, und einem zweiten Abschnitt (27), der vom ersten Abschnitt (26) getrennt ist und mit der Atmosphäre in Verbindung steht, dadurch **gekennzeichnet**, daß der kombinierte Ein- und Auslaß (42) zwischen diesen beiden Abschnitten angeordnet ist.

2. Vorrichtung nach Anspruch 1, dadurch **gekennzeichnet**, daß die beiden Abschnitte (26, 27) voneinander getrennt sind, mit Hilfe einer Trennwand (45).

3. Vorrichtung nach Anspruch 2, dadurch **gekennzeichnet**, daß die Trennwand (45) im wesentlichen vertikal nach unten sich in ein Gebiet erstreckt zwischen den zwei Abschnitten, wobei der untere Rand der Trennwand unter dem oberen Teil des kombinierten Ein- und Auslasses (42) angeordnet ist.

4. Vorrichtung nach Anspruch 2 oder 3, dadurch **gekennzeichnet**, daß die Trennwand (45) so angeordnet ist, daß ihre gedachte Fortsetzung den kombinierten Ein- und Auslaß (42) in zwei im wesentlichen gleich grolle Teile unterteilt.

5. Vorrichtung nach Anspruch 4, dadurch **gekennzeichnet**, daß die Trennwand (45) in einen Teil (46) sich fortsetzt, der teilweise den kombinierten Ein- und Auslaß (42) bedeckt.

6. Vorrichtung nach einem der vorangegangenen Ansprüche, dadurch **gekennzeichnet**, daß der Behälter (21) aus Kunststoff gefertigt ist.

## Revendications

1. Dispositif détecteur de niveaux pour appareils ménagers ou appareils similaires, comprenant un boîtier (21) muni d'un compartiment (25) qui est raccordé dans sa région inférieure, par l'intermédiaire d'un unique raccord combiné (42) d'entrée et de sortie, à une chambre de traitement (14) à laquelle un liquide est délivré, la région supérieure du compartiment présentant une première partie (26) communiquant avec un moyen (23) capteur de pression, et une seconde partie (27) qui est séparée de la première partie (26) et qui communique avec l'atmosphère, caractérisé par le fait que le raccord combiné (42) d'entrée et de sortie est intercalé entre les deux parties.

2. Dispositif selon la revendication 1, caractérisé par le fait que les deux parties (26, 27) sont séparées l'une de l'autre au moyen d'une cloison séparatrice (45).

3. Dispositif selon la revendication 2, caractérisé par le fait que la cloison séparatrice (45) s'étend principalement dans le sens vertical, vers le bas dans la zone située entre les deux parties, le bord inférieur de la cloison séparatrice étant placé au-dessous de la région supérieure du raccord combiné (42) d'entrée et de sortie.

4. Dispositif selon la revendication 2 ou 3, caractérisé par le fait que la cloison séparatrice (45) est agencée de telle sorte que son prolongement imaginaire subdivise le raccord combiné (42) d'entrée et de sortie en deux parties sensiblement de même grandeur.

5. Dispositif selon la revendication 4, caractérisé par le fait que la cloison séparatrice se prolonge dans une région (46) qui recouvre partiellement le raccord combiné (42) d'entrée et de sortie.

6. Dispositif selon l'une quelconque des revendications précédentes, caractérisé par le fait que le boîtier (21) est fabriqué en matière plastique.
